# EUROPÄISCHE PATENTSCHRIFT

(11) **EP 2 199 155 B1**
(45) Veröffentlichungstag und Bekanntmachung des Hinweises auf die Patenterteilung: **01.07.2015**
(21) Anmeldenummer: 09179606.0
(22) Anmeldetag: 17.12.2009
(51) Int. Cl.: B60Q 9/00, G01S 7/00, G08G 1/16, G06T 11/20, B60W 50/08

(54) **Verfahren und Vorrichtung zur Visualisierung der direkten Umgebung eines Fahrzeugs**
Method and device for visualising the close environment of a vehicle
Procédé et dispositif de visualisation de l'environnement immédiat d'un véhicule

(30) Priorität: 22.12.2008 DE 102008064361
(43) Veröffentlichungstag der Anmeldung: 23.06.2010
(73) Patentinhaber: Volkswagen Aktiengesellschaft, 38440 Wolfsburg (DE)
(72) Erfinder: Hofmann, Martin, 10961, Berlin (DE)
(74) Vertreter: Reitstötter Kinzebach

(56) Entgegenhaltungen:
- EP-A2- 1 531 082
- DE-A1-102007 029 033
- DE-B3-102007 032 698
- US-A- 5 654 715
- US-A1- 2005 285 725
- US-B1- 6 459 439

## Beschreibung

Die vorliegende Erfindung betrifft ein Verfahren zur Visualisierung der direkten Umgebung eines Fahrzeugs, bei dem Objekte innerhalb der direkten Umgebung des Fahrzeugs erfasst werden und die relative Position der Objekte zum Fahrzeug bestimmt wird. Bei dem Verfahren wird das Fahrzeug auf einer Anzeigefläche in dem Fahrzeug graphisch dargestellt. Ferner wird die direkte Umgebung des Fahrzeugs durch eine die graphische Darstellung des Fahrzeugs zumindest teilweise umgebende graphische Struktur visualisiert. Des Weiteren betrifft die Erfindung eine Vorrichtung zur Visualisierung der direkten Umgebung eines Fahrzeugs mit einer Einrichtung zum Erfassen von Objekten in der direkten Umgebung des Fahrzeugs und einer Anzeigevorrichtung mit einer im Fahrzeug angeordneten Anzeigefläche. Ferner umfasst die Vorrichtung eine Steuervorrichtung, die mit der Objekterfassungseinrichtung und der Anzeigevorrichtung gekoppelt ist und mit der Anzeigedaten erzeugbar sind, welche das Fahrzeug auf der Anzeigefläche graphisch darstellen und bei denen die direkte Umgebung des Fahrzeugs durch eine das Fahrzeug zumindest teilweise umgebende graphische Struktur visualisiert ist.

Aufgrund der Anpassung der Außenform von Fahrzeugen an aerodynamische Erfordernisse, ist die direkte Sicht des Fahrers auf die direkte Umgebung des Fahrzeugs vielfach stark eingeschränkt. Objekte in der direkten Umgebung des Fahrzeugs sind vielfach nur schlecht erkennbar.

Zur Unterstützung des Fahrers ist es bekannt, die direkte Umgebung des Fahrzeugs mittels Sensoren, insbesondere Ultraschallsensoren, zu erfassen und die Annäherung des Fahrzeugs an ein erfasstes Objekt in dem Fahrzeug visuell und/oder akustisch zu signalisieren. Derartige Systeme werden auch als Einparkhilfen bezeichnet.

Aus der EP 1 531 082 B1 ist ein Verfahren zum Bereitstellen von Informationen für einen Fahrzeugführer zum Einparken bekannt, bei dem innerhalb eines Messbereichs befindliche Hindernisse detektiert und deren Position relativ zu der Fahrzeugposition bestimmt werden, wobei während der Detektion von Hindernissen das Fahrzeug und dessen Position in Relation zu bereits detektierten Hindernissen auf einem dem Fahrer zugeordneten Display dargestellt werden. Bei dem Verfahren wird derjenige Bereich des Messbereichs in unmittelbarer Nähe eines detektierten Hindernisses in einer vordefinierten Farbe dargestellt, welche sich von der vordefinierten Farbe für die Darstellung eines Messbereichs und von der vordefinierten Farbe für die Darstellung eines Hindernisses unterscheidet.

Aus der WO 2008/055644 A2 ist ein Verfahren zur Erzeugung eines Gesamtbildes der Umgebung eines Kraftfahrzeugs unter Verwendung einer mit dem Kraftfahrzeug verbundenen Bildsensoreinrichtung bekannt. Dabei liefert die Bildsensoreinrichtung die Bilddaten in einem ersten Erfassungsbereich der Fahrzeugumgebung. Zusätzlich zur Bildsensoreinrichtung wird eine mit dem Kraftfahrzeug verbundene Abstandssensoreinrichtung verwendet, welche Abstandsdaten in einem zweiten Erfassungsbereich der Fahrzeugumgebung liefert. Bei dem Verfahren werden die Daten der Sensoreinrichtungen zu einem Gesamtbild zusammengesetzt. Wird ein Objekt in einem der Erfassungsbereiche detektiert, wird in dem virtuellen Abbild der entsprechenden Bildbereiche die Farbe und/oder die Helligkeit verändert. Auf diese Weise wird das Vorhandensein von Objekten in dem virtuellen Abbild der Fahrzeugumgebung visualisiert.

Die DE 10 2007 032 698 B3 beschreibt ein Verfahren zur Ermittlung eines Anzeigebildes zur Visualisierung der direkten Umgebung eines Fahrzeugs, bei dem innerhalb eines Erfassungsgrenzlinie eine Bezier-Kurve eine Objektposition visualisiert. Dabei werden eine oder mehrere Bezier-Kurven in das Anzeigebild integriert, sodass zusammen mit der Erfassungsgrenzlinie eine Fläche gebildet wird, die z.B. schraffiert dargestellt wird. Diese schraffierte Fläche zeigt an, dass sich ein Objekt in diesem Erfassungsbereich befindet.

Es ist die Aufgabe der vorliegenden Erfindung, ein Verfahren und eine Vorrichtung der eingangs genannten Art bereitzustellen, welche dem Fahrer des Fahrzeugs ein erfasstes Objekt in der direkten Umgebung des Fahrzeugs so visualisiert, dass er die relative Position des Objekts zu dem Fahrzeug schnell und intuitiv erfassen kann.

Erfindungsgemäß wird diese Aufgabe durch ein Verfahren mit dem Merkmal des Anspruchs 1 und eine Vorrichtung mit den Merkmalen des Anspruchs 14 gelöst. Vorteilhafte Aus- und Weiterbildungen ergeben sich aus den abhängigen Ansprüchen.

Das erfindungsgemäße Verfahren ist dadurch gekennzeichnet, dass zur Visualisierung eines erfassten Objekts die graphische Struktur geometrisch verändert wird.

Unter der direkten Umgebung des Fahrzeugs wird im Sinne der Erfindung ein Bereich verstanden, der sich von zumindest einem Teilbereich der Außenhülle des Fahrzeugs oder in einem geringen Abstand zu diesem Teilbereich der Außenhülle von dem Fahrzeug weg erstreckt. Die direkte Umgebung umfasst insbesondere den Bereich der herkömmlicherweise bei Einparkhilfen für Fahrzeuge überwacht wird. Der Bereich kann beispielsweise bis etwa 3 m reichen. Insbesondere wird ein Bereich erfasst, der sich etwa 20 cm bis etwa 250 cm von der Außenhülle des Fahrzeugs entfernt befindet. Dabei kann entweder nur der Bereich vor dem Fahrzeug und hinter dem Fahrzeug erfasst werden. Bevorzugt wird jedoch der Gesamtbereich um das Fahrzeug herum überwacht. In diesem Fall umschließt die graphische Struktur die graphische Darstellung des Fahrzeugs vollständig.

Gemäß einer Ausgestaltung des erfindungsgemäßen Verfahrens wird das Fahrzeug und die direkte Umgebung des Fahrzeugs in einer Aufsicht graphisch auf der Anzeigefläche im Fahrzeug dargestellt.

Unter einer geometrischen Veränderung der graphischen Struktur wird im Sinne der Erfindung eine Veränderung der Fläche verstanden, welche die graphische Struktur auf der Anzeigefläche einnimmt. Die graphische Struktur wird bei dem erfindungsgemäßen Verfahren insbesondere in dem Bereich geometrisch verändert, welcher der relativen Position des erfassten Objekts zu dem Fahrzeug benachbart ist. Dabei ist bevorzugt die Veränderung umso stärker, desto geringer der Abstand des Objekts von dem Fahrzeug ist. Des Weiteren kann die Veränderung der graphischen Struktur umso näher an der graphischen Darstellung des Fahrzeugs sein, desto geringer der Abstand des Objekts von dem Fahrzeug ist.

Gemäß einer bevorzugten Ausgestaltung des erfindungsgemäßen Verfahrens ist die graphische Struktur gleichförmig. Zur Visualisierung des erfassten Objekts wird in diesem Fall die Gleichförmigkeit der graphischen Struktur gestört dargestellt. Beispielsweise kann zur Visualisierung des erfassten Objekts die graphische Struktur in Richtung der graphischen Darstellung des Fahrzeugs verzerrt dargestellt werden.

Gemäß einer Ausgestaltung des erfindungsgemäßen Verfahrens weist die graphische Struktur zur Visualisierung des erfassten Objekts eine Eindellung in Richtung der graphischen Darstellung des Fahrzeugs auf. Die Veränderung der graphischen Struktur zur Visualisierung eines erfassten Objekts hängt insbesondere von der Form des erfassten Objekts ab. Die Form der Eindellung kann insbesondere der Form des erfassten Objekts in einem Bereich entsprechen, der dem Fahrzeug zugewandt ist.

Gemäß einer bevorzugten Ausgestaltung des erfindungsgemäßen Verfahrens entspricht die geometrische Veränderung der graphischen Struktur der virtuellen Darstellung einer elastischen Verformung eines Materials, welches das Fahrzeug umgibt und welches durch das Objekt verformt wird. Dabei wird insbesondere das erfasste Objekt selbst graphisch nicht dargestellt. Die graphische Struktur erweckt auf diese Weise den Eindruck eines Puffermaterials, welches das Fahrzeug umgibt und welches durch Objekte in der direkten Umgebung des Fahrzeugs elastisch verformt wird. Diese Art der Visualisierung von erfassten Objekten ist vom Fahrer besonders einfach und intuitiv erfassbar. Auf diese Weise ist es dem Fahrer möglich, die Position eines Objekts in der direkten Umgebung des Fahrzeugs und dessen Abstand zum Fahrzeug sehr schnell zu erfassen.

Die graphische Struktur umfasst Ringe, welche die graphische Darstellung des Fahrzeugs vollständig umgeben. Die Ringe sind konzentrisch angeordnet, wenn kein Objekt in der direkten Umgebung des Fahrzeugs visualisiert wird. Die Ringe können insbesondere äquidistant zueinander angeordnet sein, wenn kein Objekt visualisiert wird.

Zur Visualisierung des erfassten Objekts werden die Ringe in dem Bereich eingedellt dargestellt, welcher der relativen Position des erfassten Objekts zu dem Fahrzeug benachbart ist, wobei die Eindellung äußerer Ringe stärker ist als die Eindellung innerer Ringe. Die Eindellungen der Ringe führen jedoch nicht zu einer Überschneidung von Ringen. Über den Abstand der Ringe zueinander bei der Eindellung kann eine virtuelle Kraft veranschaulicht werden, welche von dem Objekt auf eine elastisches Puffermaterial ausgeübt werden würde, welches das Fahrzeug umgibt.

Gemäß einer Weiterbildung des erfindungsgemäßen Verfahrens wird die geometrische Veränderung der graphischen Struktur durch eine Bezier-Kurve gebildet. Wird die graphische Struktur von Ringen gebildet, welche die graphische Darstellung des Fahrzeugs umgeben, können diese Ringe von Bezier-Kurven gebildet werden, die mittels mehrerer beabstandeter, die graphische Darstellung des Fahrzeugs umgebender Ankerpunkte und mehrerer Kontrollpunkte definiert werden, die jeweils zwei Ankerpunkten zugeordnet sind. Die geometrische Veränderung der Ringe kann beispielsweise dadurch bestimmt werden, dass die Kontrollpunkte der Bezier-Kurven in Abhängigkeit von der relativen Position des erfassten Objekts zu dem Fahrzeug versetzt werden. Dabei kann das Verhältnis der Abstände der Kontrollpunkte untereinander die zu verschiedenen Bezier-Kurven gehören, von der relativen Position des erfassten Objekts zu dem Fahrzeug abhängen.

Falls sich die relative Position des erfassten Objekts zu dem Fahrzeug bei einem Ankerpunkt befindet, kann die geometrische Veränderung eines Rings der Ringe dadurch bestimmt werden, dass zwei Kontrollpunkte der Bezier-Kurve und ein dazwischen liegender Ankerpunkt in Abhängigkeit von der relativen Position des erfassten Objekts zu dem Fahrzeug versetzt werden.

Die Objekte innerhalb der direkten Umgebung des Fahrzeugs werden insbesondere mittels Sensoren erfasst. Die Kontrollpunkte der Bezier-Kurven können in diesem Fall von den Positionen der Sensoren abhängen und die Positionen der Ankerpunkte von der äußeren Form des Fahrzeugs abhängen. Die Kontrollpunkte werden insbesondere bei der Position der graphischen Darstellung des Fahrzeugs gesetzt, die der tatsächlichen Position der Sensoren im Fahrzeug entspricht oder bei einer Position in einem definierten Abstand zu der tatsächlichen Position eines Sensors. Gleichermaßen können die Ankerpunkte bei den Positionen der graphischen Darstellung des Fahrzeugs gesetzt werden, die Punkten der tatsächlichen Außenhülle des Fahrzeugs entsprechen, oder in einem definierten Abstand zu diesen Positionen der Außenhülle sind.

Gemäß einer Weiterbildung des erfindungsgemäßen Verfahrens kann zur Visualisierung eines erfassten Objekts außerdem die graphische Struktur farblich in dem Bereich verändert werden, der zu dem erfassten Objekt benachbart ist.

Falls in der direkten Umgebung des Fahrzeugs mehrere Objekte bei verschiedenen Positionen erfasst werden, kann die graphische Struktur bei mehreren entsprechenden Bereichen geometrisch verändert werden, so dass der Fahrer gleichzeitig die Positionen mehrerer Objekte schnell und intuitiv erfassen kann.

Die erfindungsgemäße Vorrichtung ist **dadurch gekennzeichnet, dass** mit der Steuervorrichtung in Abhängigkeit von Daten die von der Objekterfassungseinrichtung übertragen worden sind, Anzeigedaten erzeugbar sind, bei denen zur Visualisierung eines erfassten Objekts die graphische Struktur in einem Bereich geometrisch verändert ist, welcher zu der relativen Position des erfassten Objekts benachbart ist.

Die erfindungsgemäße Vorrichtung ist insbesondere so ausgebildet, dass sie die Schritte des vorstehend beschriebenen Verfahrens teilweise oder insgesamt ausführen kann.

Die Objekterfassungseinrichtung der erfindungsgemäßen Vorrichtung umfasst mehrere Sensoren, die beabstandet das Fahrzeug umgeben. Es kann sich dabei um optische, insbesondere Infrarotsensoren, Ultraschallsensoren und/oder Radarsensoren handeln. Falls erforderlich, kann die Objekterfassungseinrichtung zusätzlich eine Verarbeitungseinrichtung umfassen, mit der aus den Sensordaten die relative Position eines Objekts in der direkten Umgebung des Fahrzeugs zum Fahrzeug bestimmt werden kann.

Die Erfindung wird nun anhand eines Ausführungsbeispiels mit Bezug zu den Zeichnungen erläutert.
- Figur 1: zeigt schematisch ein Fahrzeug mit einem Ausführungsbeispiel der erfindungsgemäßen Vorrichtung,
- die Figuren 2 und 3: zeigen Anzeigen, die von einem Ausführungsbeispiel des erfindungsgemäßen Verfahrens erzeugt werden, und
- die Figuren 4 bis 8: veranschaulichen die Erzeugung und Veränderung der graphischen Struktur, welche die graphische Darstellung des Fahrzeugs umgibt.

Das Fahrzeug 1, welches mit dem Ausführungsbeispiel der erfindungsgemäßen Vorrichtung ausgestattet ist, umfasst auf an sich bekannte Weise eine Vielzahl von Sensoren 2, welche das Fahrzeug 1 umgeben. Die Sensoren 2 sind insbesondere in einer bestimmten Höhe in die Außenhülle des Fahrzeugs 1 integriert. Bei den Sensoren 2 kann es sich um optische Sensoren, Infrarotsensoren, Radarsensoren und/oder Ultraschallsensoren handeln. Durch die Sensoren 2 wird eine Rundumsensorik der direkten Umgebung des Fahrzeugs bereitgestellt, welche beispielsweise bis zu einem Abstand von 250 Zentimeter von der Außenhülle des Fahrzeugs reichen kann. Der Abstand kann jedoch auch geringer sein und für die Bereiche vor, hinter und seitlich neben dem Fahrzeug unterschiedlich sein.

Die Sensoren 2 sind über einen Fahrzeugbus 3 mit einer Steuervorrichtung 5 verbunden. Die Steuervorrichtung 5 ist wiederum mit einer Anzeigevorrichtung 4 verbunden, welche eine für den Fahrer sichtbare Anzeigefläche im Innenraum des Fahrzeugs 1 bereitstellt. Als Anzeigefläche kann beispielsweise die Anzeigefläche eines Navigationssystems oder einer Multifunktionsanzeige genutzt werden.

Auf Basis der von den Sensoren 2 bereitgestellten Daten können Objekte innerhalb der direkten Umgebung des Fahrzeugs erfasst werden. Ferner kann die relative Position dieser Objekte zum Fahrzeug bestimmt werden.

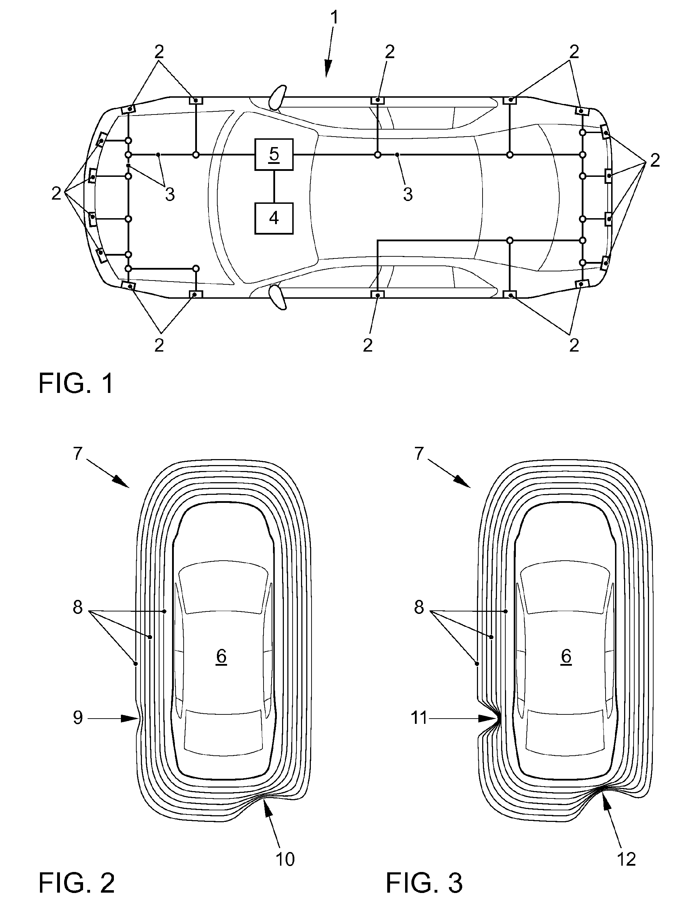

Im Folgenden wird mit Bezug zu den Fig. 2 und 3 erläutert, wie mittels der Sensoren 2 erfasste Objekte innerhalb der direkten Umgebung des Fahrzeugs 1 auf der Anzeigefläche visualisiert werden:
Auf der Anzeigefläche wird das Fahrzeug graphisch dargestellt, d. h. es wird eine graphische Darstellung 6 des Fahrzeugs 1 angezeigt, die insbesondere die Außenabmessungen des Fahrzeugs 1 in einer bestimmten Höhe wiedergibt. Das Fahrzeug 1 und die Umgebung des Fahrzeugs 1 werden dabei in einer Aufsicht von oben dargestellt. Des Weiteren wird die direkte Umgebung des Fahrzeugs 1 durch eine die graphische Darstellung 6 des Fahrzeugs 1 zumindest teilweise umgebende graphische Struktur 7 visualisiert. Dabei entspricht die Geometrie der graphischen Struktur 7 relativ zu der Geometrie der graphischen Darstellung 6 des Fahrzeugs 1 im Verhältnis der tatsächlichen Geometrie des Fahrzeugs 1 zu der Umgebung, die von den Sensoren 2 überwacht wird.

Die graphische Struktur 7 wird in einem Zustand, bei dem kein Objekt in der direkten Umgebung des Fahrzeugs 1 visualisiert wird, von mehreren konzentrischen, äquidistant angeordneten Ringen 8 gebildet, welche die graphische Darstellung 6 des Fahrzeugs 1 vollständig umgeben.

Wenn mittels der Sensoren 2 ein Objekt erfasst wird, welches einen definierten Abstand zu der Außenhülle des Fahrzeugs 1 unterschreitet, wird dieses Objekt dadurch auf der Anzeigefläche im Fahrzeug 1 visualisiert, dass die graphische Struktur 7 geometrisch verändert wird. Diese geometrischen Veränderungen der graphischen Struktur 7 sind in den Fig. 2 und 3 gezeigt. Bei der Anzeige gemäß Fig. 2 sind beispielsweise zwei Objekte in der direkten Umgebung des Fahrzeugs 1 erfasst worden. Ein Objekt im hinteren Bereich der linken Seite des Fahrzeugs 1 und ein Objekt bei der hinteren rechten Ecke des Fahrzeugs 1. Diese Objekte werden auf der Anzeigefläche im Fahrzeug wie folgt visualisiert:
Ein erfasstes Objekt kann maßstabsgetreu in seiner relativen Position zu dem Fahrzeug 1 relativ zu der graphischen Darstellung 6 des Fahrzeugs 1, graphisch dargestellt werden. Eine solche graphische Darstellung ist jedoch nicht erforderlich. Bei den in den Fig. 2 und 3 gezeigten Anzeigen wird das Objekt selbst nicht graphisch dargestellt. Die graphische Struktur 7 wird jedoch in dem Bereich bzw. benachbart zu dem Bereich verändert, bei welchem sich die graphische Darstellung des Objekts relativ zu der graphischen Darstellung 6 des Fahrzeugs 1 befinden würde. Die Fläche der Anzeigefläche, welche der maßstabsgetreuen Darstellung des Objekts entsprechen würde, wird nicht mehr von der graphischen Struktur eingenommen. Diese Fläche kann beispielsweise von der graphischen Struktur 7 ausgespart werden.

Ist die graphische Struktur 7 durch die Ringe 8 gebildet, kann die geometrische Veränderung der graphischen Struktur 7 so erfolgen, dass die Ringe 8 durch ein virtuelles Objekt, welches sich bei der Position auf der Anzeigefläche befinden würde, die der tatsächlichen Position des erfassten Objekts relativ zu dem Fahrzeug 1 entspricht, eingedellt werden. Derartige Eindellungen 9 bis 12 sind in den Fig. 2 und 3 bei verschiedenen Positionen gezeigt. Die Form der Eindellung 9 bis 12 entspricht dabei der Form des erfassten Objekts. Die Eindellung 9 bis 12 befindet sich dabei benachbart zu dem virtuellen, d. h. auf der Anzeigefläche tatsächlich nicht dargestellten Objekt. Aus der Tiefe der Eindellung 9 bis 12 ergibt sich der Abstand des erfassten Objekts zu der Außenhülle des Fahrzeugs 1. Je näher sich ein Abschnitt des äußersten Rings 8 bei der graphischen Darstellung 6 des Fahrzeugs 1 befindet, desto näher ist das erfasste Objekt an der Außenhülle des Fahrzeugs 1. Die Ringe 8 werden dabei bei den Eindellungen 9 bis 12 so gestaucht, dass sie nicht mehr wie ursprünglich gleichförmig zueinander angeordnet sind, jedoch weiterhin mit einem Abstand zueinander versehen sind. Im Bereich der Eindellung 9 bis 12 verringert sich jedoch der Abstand der Ringe 8 zueinander, wodurch die Eindellung 9 bis 12 erzeugt wird.

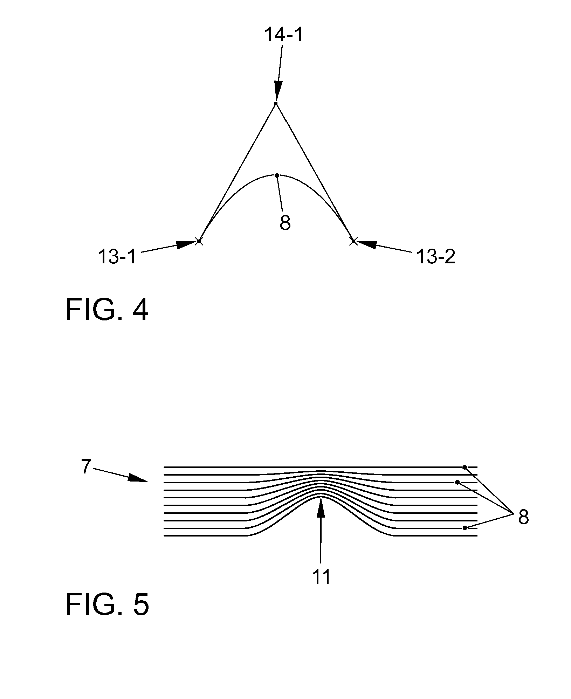

Im Folgenden wird mit Bezug zu den Fig. 4 bis 8 erläutert, wie die graphische Struktur 7 anhand der Ringe 8 und die geometrischen Veränderungen der Struktur 7 zur Visualisierung eines erfassten Objekts bestimmt wird. Dabei können die Anzeigedaten für die graphische Darstellung 6 des Fahrzeugs 1 und für die graphische Struktur 7 von der Steuervorrichtung 5 anhand der von den Sensoren 2 übermittelten Daten erzeugt werden.

Die Ringe 8 werden durch Bezier-Kurven gebildet. Wie in Fig. 4 gezeigt, kann eine Bezier-Kurve durch zwei Ankerpunkte 13-1 und 13-2, sowie einen Kontrollpunkt 14-1, definiert werden. Bei dem vorliegenden Ausführungsbeispiel wird eine so genannte quadratische Bezier-Kurve verwendet. Bei dieser Bezier-Kurve bestimmt der Kontrollpunkt 14-1 die Stärke der Krümmung der Kurve zwischen den Ankerpunkten 13-1 und 13-2.

Um die graphische Struktur 7 zu bilden, werden zunächst mehrere Bezier-Kurven so gebildet, dass sich mehrere konzentrische Ringe 8 ergeben, welche die graphische Darstellung 6 des Fahrzeugs 1 vollständig umgeben. In Fig. 5 ist ein Ausschnitt dieser graphischen Struktur 7 gezeigt. Werden nun zwischen jeweils zwei Ankerpunkten die Kontrollpunkte der Bezier-Kurven in einer Richtung senkrecht zu den Ringen 8 voneinander entfernt, kann eine Eindellung 11 erzeugt werden, wie sie in Fig. 5 und in den Fig. 2 und 3 gezeigt ist. Dabei werden die Kontrollpunkte der Bezier-Kurven so voneinander entfernt, dass sich die Ringe 8 nicht berühren. Das Verhältnis der Abstände der Kontrollpunkte untereinander bestimmt dabei die Stärke der Eindellung 11. Die Kurve des äuβersten Ringes 8 kann dabei so gebildet werden, dass sie einen Bereich umschließt, in dem das erfasste Objekt maßstabsgetreu relativ zu dem Fahrzeug 1 dargestellt werden würde. Die graphische Struktur 7 verhält sich somit so, wie ein elastische Material, welches von einer graphischen Darstellung des Objekts eingedellt wird.

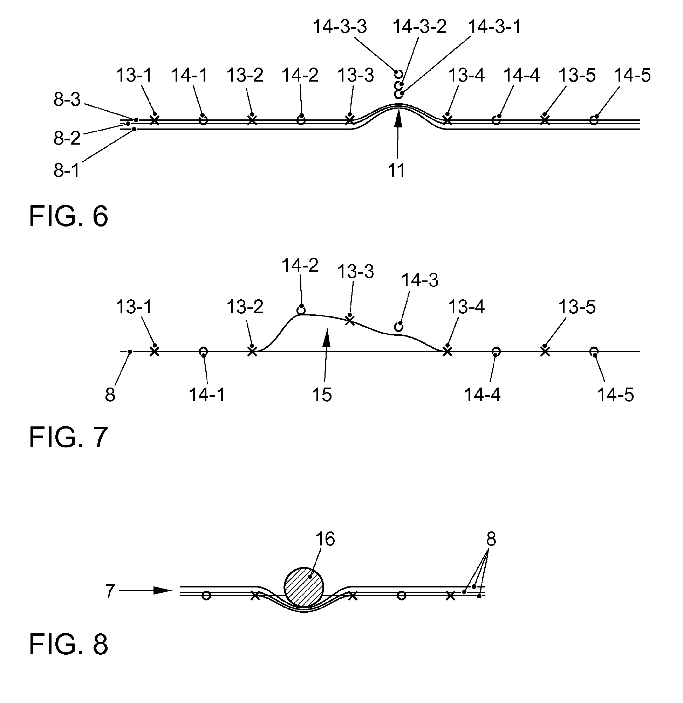

Um die gesamte Umgebung um die graphische Darstellung 6 des Fahrzeugs 1 vollständig darzustellen, wird für jeden Sensor 2 eine Bezier-Kurve erzeugt, die einen Ring bildet. Wie in Fig. 6 gezeigt ist, sind dabei die Kontrollpunkte 14-1 bis 14-5 an der Position platziert, die der Position des Sensors 2 in der graphischen Darstellung 6 des Fahrzeugs 1 entspricht. Gleichermaßen werden die Ankerpunkte 13-1 bis 13-5 an der Form der graphischen Darstellung 6 des Fahrzeugs 1 ausgerichtet. Um zueinander konzentrische Ringe 8 der graphischen Struktur 7 zu bilden, können sich die Kontroll- bzw. Ankerpunkte 13, 14 gegebenenfalls nicht direkt bei den Positionen befinden, die den Positionen des Sensors 2 bzw. der Außenhülle des Fahrzeugs 1 entsprechen, sondern beabstandet zu diesen Positionen sein.

Wird nun ein Objekt erfasst, dessen Position einer Position zwischen den Ankerpunkten 13-3 und 13-4 entspricht, wird zwischen diesen Ankerpunkten 13-3 und 13-4 eine Eindellung 11 dadurch gebildet, dass die Kontrollpunkte 14-3-1, 14-3-2 und 14-3-3 der Ringe 8-1, 8-2 und 8-3 wie in Fig. 6 gezeigt, versetzt werden. Dabei bestimmt der Messwert des Sensors 2, welcher den Kontrollpunkten 14-3-1, 14-3-2 und 14-3-3 zugeordnet ist, die Verschiebung des entsprechenden Kontrollpunktes 14 und somit die Stärke der Eindellung 11.

Wird ein Objekt in einem Bereich erfasst, bei dem bei der graphischen Darstellung ein Ankerpunkt 13-3 positioniert ist, wird sowohl dieser Ankerpunkt 13-3 als auch die beiden benachbarten Kontrollpunkte 14-2 und 14-3, wie in Fig. 7 gezeigt, verschoben, um die Eindellung 15 zu erzeugen.

In Fig. 8 ist nochmals zur Veranschaulichung eine graphische Darstellung 16 des erfassten Objekts und die zugehörige geometrische Veränderung der graphischen Struktur 7 gezeigt. Die graphische Darstellung 16 des erfassten Objekts dellt die von den Ringen 8 gebildete graphische Struktur 7 so ein, dass der äußerste Ring 8 an der graphischen Darstellung 16 abschnittsweise anliegt.

### BEZUGSZEICHENLISTE

- 1: Fahrzeug
- 2: Sensoren
- 3: Fahrzeugbus
- 4: Anzeigevorrichtung
- 5: Steuervorrichtung
- 6: graphische Darstellung des Fahrzeugs 1
- 7: graphische Struktur
- 8: Ringe
- 9, 10, 11, 12: Eindellungen
- 13: Ankerpunkte
- 14: Kontrollpunkte
- 15: Eindellung
- 16: graphische Darstellung eines erfassten Objekts

## Patentansprüche

1. Verfahren zur Visualisierung der direkten Umgebung eines Fahrzeugs (1), bei dem
- Objekte innerhalb der direkten Umgebung des Fahrzeugs (1) erfasst werden und die relative Position der Objekte zum Fahrzeug (1) bestimmt wird,
- das Fahrzeug (1) auf einer Anzeigefläche in dem Fahrzeug (1) graphisch dargestellt wird und
- die direkte Umgebung des Fahrzeugs (1) durch eine die graphische Darstellung (6) des Fahrzeugs (1) zumindest teilweise umgebende graphische Struktur (7) visualisiert wird,
**dadurch gekennzeichnet, dass**
- zur Visualisierung eines erfassten Objekts die graphische Struktur (7) geometrisch verändert wird, indem die Fläche, welche die graphische Struktur (7) auf der Anzeigefläche einnimmt, verändert wird,
- wobei die graphische Struktur (7) konzentrische Ringe (8) umfasst, welche die graphische Darstellung (6) des Fahrzeugs (1) vollständig umgeben und welche zur Visualisierung des erfassten Objekts eingedellt (9 bis 12) dargestellt werden.

2. Verfahren nach Anspruch 1,
**dadurch gekennzeichnet,**
**dass** zur Visualisierung eines erfassten Objekts, die graphische Struktur (7) in dem Bereich geometrisch verändert wird, welcher der relativen Position des erfassten Objekts zu dem Fahrzeug (1) benachbart ist.

3. Verfahren nach Anspruch 1 oder 2
**dadurch gekennzeichnet,**
**dass** die graphische Struktur (7) gleichförmig ist und zur Visualisierung des erfassten Objekts die Gleichförmigkeit der graphischen Struktur (7) gestört dargestellt wird.

4. Verfahren nach einem der vorstehenden Ansprüche,
**dadurch gekennzeichnet,**
**dass** zur Visualisierung des erfassten Objekts die graphische Struktur (7) eine Eindellung (9 bis 12, 15) in Richtung der graphischen Darstellung (6) des Fahrzeugs (1) aufweist.

5. Verfahren nach einem der vorstehenden Ansprüche,
**dadurch gekennzeichnet, dass** die Veränderung der graphischen Struktur (7) zur Visualisierung eines erfassten Objekts von der Form des erfassten Objekts abhängt.

6. Verfahren nach einem der vorstehenden Ansprüche,
**dadurch gekennzeichnet,**
**dass** die geometrische Veränderung der graphischen Struktur (7) der virtuellen Darstellung einer elastischen Verformung eines Materials entspricht, welches das Fahrzeug (1) umgibt und welches durch das Objekt verformt wird.

7. Verfahren nach einem der vorherigen Ansprüche,
**dadurch gekennzeichnet,**
**dass** das erfasste Objekt selbst nicht dargestellt wird.

8. Verfahren nach einem der vorstehenden Ansprüche,
**dadurch gekennzeichnet,**
**dass** die geometrische Veränderung der graphischen Struktur (7) durch eine Bezier-Kurve gebildet wird.

9. Verfahren nach Anspruch 8,
**dadurch gekennzeichnet,**
**dass** die Ringe (8), welche die graphische Darstellung (6) des Fahrzeugs (1) umgeben, von Bezier-Kurven gebildet werden, die mittels mehrerer beabstandeter, die graphische Darstellung (6) des Fahrzeugs (1) umgebender Ankerpunkte (13) und mehrerer Kontrollpunkte (14), die jeweils zwei Ankerpunkten (13) zugeordnet sind, definiert werden.

10. Verfahren nach Anspruch 9,
**dadurch gekennzeichnet,**
**dass** die geometrische Veränderung der Ringe (8) dadurch bestimmt wird, dass die Kontrollpunkte (14) der Bezier-Kurven in Abhängigkeit von der relativen Position des erfassten Objekts zu dem Fahrzeug (1) versetzt werden.

11. Verfahren nach Anspruch 9 oder 10,
**dadurch gekennzeichnet,**
**dass** bei der Erzeugung einer Eindellung (11) das Verhältnis der Abstände der Kontrollpunkte (14) untereinander, die zu verschiedenen Bezier-Kurven gehören, von der relativen Position des erfassten Objekts zu dem Fahrzeug (1) abhängt.

12. Verfahren nach einem der Ansprüche 9 bis 11,
**dadurch gekennzeichnet,**
**dass** die geometrische Veränderung eines Ringes der Ringe (8) dadurch bestimmt wird, dass zwei Kontrollpunkte (14-2, 14-3) der Bezier-Kurve und ein dazwischen liegender Ankerpunkt (13-3) in Abhängigkeit von der relativen Position des erfassten Objekts zu dem Fahrzeug (1) versetzt werden, wenn sich die relative Position des erfassten Objekts zu dem Fahrzeug (1) bei dem Ankerpunkt (13-3) befindet.

13. Verfahren nach einem der Ansprüche 9 bis 12,
**dadurch gekennzeichnet,**
**dass** die Objekte innerhalb der direkten Umgebung des Fahrzeugs (1) mittels Sensoren (2) erfasst werden, die Kontrollpunkte (14) der Bezier-Kurven von den Positionen der Sensoren (2) abhängen und die Positionen der Ankerpunkte (13) von der äußeren Form des Fahrzeugs (1) abhängt.

14. Vorrichtung zur Visualisierung der direkten Umgebung eines Fahrzeugs, mit
- einer Einrichtung (2) zum Erfassen von Objekten in der direkten Umgebung des Fahrzeugs (1),
- einer Anzeigevorrichtung (4) mit einer im Fahrzeug (1) angeordneten Anzeigefläche und
- einer Steuervorrichtung (5), die mit der Objekterfassungsvorrichtung (2) und der Anzeigevorrichtung (4) gekoppelt ist und mit der Anzeigedaten erzeugbar sind, welche das Fahrzeug (1) auf der Anzeigefläche graphisch darstellen und bei denen die direkte Umgebung des Fahrzeugs (1) durch eine das Fahrzeug (1) zumindest teilweise umgebende graphische Struktur (7) visualisiert ist,
**dadurch gekennzeichnet, dass**
- mit der Steuervorrichtung (5) in Abhängigkeit von Daten, die von der Objekterfassungseinrichtung (2) übertragen worden sind, Anzeigedaten erzeugbar sind, bei denen zur Visualisierung eines erfassten Objekts die graphische Struktur (7) in einem Bereich geometrisch verändert ist, welcher zu der relativen Position des erfassten Objekts benachbart ist, wobei die Fläche, welche die graphische Struktur (7) auf der Anzeigefläche einnimmt, veränderbar ist, und wobei die graphische Struktur (7) konzentrische Ringe (8) umfasst, welche die graphische Darstellung (6) des Fahrzeugs (1) vollständig umgeben und welche zur Visualisierung des erfassten Objekts eingedellt (9 bis 12) darstellbar sind.

## Claims

1. Method for visualizing the close environment of a vehicle (1), in which
- objects within the close environment of the vehicle (1) are detected and the relative position of the objects in respect of the vehicle (1) is determined,
- the vehicle (1) is displayed graphically on a display surface in the vehicle (1), and
- the close environment of the vehicle (1) is visualized by a graphic structure (7) which at least partly surrounds the graphic representation (6) of the vehicle (1),
**characterized in that**
- in order to visualize a detected object, the graphic structure (7) is changed geometrically in that the area occupied by the graphic structure (7) on the display surface is changed,
- wherein the graphic structure (7) comprises concentric rings (8) which completely surround the graphic representation (6) of the vehicle (1) and which are displayed in an indented fashion (9 to 12) in order to visualize the detected object.

2. Method according to Claim 1,
**characterized**
**in that** in order to visualize a detected object, the graphic structure (7) is changed geometrically in the region which is adjacent to the relative position of the detected object with respect to the vehicle (1).

3. Method according to Claim 1 or 2,
**characterized**
**in that** the graphic structure (7) is uniform, and in order to visualize the detected object the uniformity of the graphic structure (7) is displayed in a disrupted fashion.

4. Method according to one of the preceding claims,
**characterized**
**in that** in order to visualize the detected object, the graphic structure (7) has an indent (9 to 12, 15) in the direction of the graphic representation (6) of the vehicle (1).

5. Method according to one of the preceding claims,
**characterized in that** the change in the graphic structure (7) for visualizing a detected object depends on the shape of the detected object.

6. Method according to one of the preceding claims,
**characterized**
**in that** the geometric change in the graphic structure (7) of the virtual representation corresponds to elastic deformation of the material which surrounds the vehicle (1) and which is deformed by the object.

7. Method according to one of the preceding claims,
**characterized**
**in that** the detected object itself is not displayed.

8. Method according to one of the preceding claims,
**characterized**
**in that** the geometric change in the graphic structure (7) is formed by a Bezier curve.

9. Method according to Claim 8,
**characterized**
**in that** the rings (8) which surround the graphic representation (6) of the vehicle (1) are formed by Bezier curves which are defined by means of a plurality of spaced-apart anchor points (13) which surround the graphic representation (6) of the vehicle (1), and a plurality of control points (14) which are each assigned two anchor points (13).

10. Method according to Claim 9,
**characterized**
**in that** the geometric change in the rings (8) is determined by virtue of the fact that the control points (14) of the Bezier curves are offset as a function of the relative position of the detected object with respect to the vehicle (1).

11. Method according to Claim 9 or 10,
**characterized**
**in that** during the production of an indent (11) the ratio of the distances between the control points (14) which are associated with different Bezier curves depends on the relative position of the detected object with respect to the vehicle (1).

12. Method according to one of Claims 9 to 11,
**characterized**
**in that** the geometric change in one ring of the rings (8) is determined by virtue of the fact that two control points (14-2, 14-3) of the Bezier curve and an anchor point (13-3) lying between them is offset as a function of the relative position of the detected object with respect to the vehicle (1) if the relative position of the detected object with respect to the vehicle (1) is located at the anchor point (13-3).

13. Method according to one of Claims 9 to 12,
**characterized**
**in that** the objects within the close environment of the vehicle (1) are detected by means of sensors (2), the control points (14) of the Bezier curves depend on the positions of the sensors (2), and the positions of the anchor points (13) depend on the external shape of the vehicle (1).

14. Device for visualizing the close environment of a vehicle, having
- a device (2) for detecting objects in the close environment of the vehicle (1),
- a display device (4) having a display surface which is arranged in the vehicle (1), and
- a control device (5) which is coupled to the object-detecting device (2) and the display device (4) and with which display data can be produced which graphically represent the vehicle (1) on the display surface, in which data the close environment of the vehicle (1) is visualized by a graphic structure (7) which at least partly surrounds the vehicle (1),
**characterized in that**
- display data, in which, in order to visualize a detected object, the graphic structure (7) is changed geometrically in a region which is adjacent to the relative position of the detected object, can be produced with the control device (5) as a function of data which has been transmitted by the object-detecting device (2), wherein the area occupied by the graphic structure (7) on the display surface can be changed, and wherein the graphic structure (7) comprises concentric rings (8) which completely surround the graphic representation (6) of the vehicle (1) and which can be displayed in an indented fashion (9 to 12) in order to visualize the detected object.

## Revendications

1. Procédé de visualisation de l'environnement direct d'un véhicule (1), selon lequel
- des objets à l'intérieur de l'environnement direct du véhicule (1) sont détectés et la position relative des objets par rapport au véhicule (1) est définie,
- le véhicule (1) est représenté graphiquement sur une surface d'affichage dans le véhicule (1) et
- l'environnement direct du véhicule (1) est visualisé par une structure graphique (7) qui entoure au moins partiellement la représentation graphique (6) du véhicule (1),
**caractérisé en ce que**
- pour visualiser un objet détecté, la structure graphique (7) est modifiée géométriquement en modifiant la surface qui accueille la structure graphique (7) sur la surface d'affichage,
- la structure graphique (7) comprenant des anneaux concentriques (8) qui entourent complètement la représentation graphique (6) du véhicule (1) et qui sont représentés enfoncés (9 à 12) pour la visualisation de l'objet détecté.

2. Procédé selon la revendication 1, **caractérisé en ce que** pour la visualisation d'un objet détecté, la structure graphique (7) est modifiée géométriquement dans la zone qui est voisine de la position relative de l'objet détecté par rapport au véhicule (1).

3. Procédé selon la revendication 1 ou 2, **caractérisé en ce que** la structure graphique (7) est uniforme et pour la visualisation de l'objet détecté, l'uniformité de la structure graphique (7) est représentée perturbée.

4. Procédé selon l'une des revendications précédentes, **caractérisé en ce que** pour la visualisation de l'objet détecté, la structure graphique (7) présente un enfoncement (9 à 12, 15) en direction de la représentation graphique (6) du véhicule (1).

5. Procédé selon l'une des revendications précédentes, **caractérisé en ce que** la modification de la structure graphique (7) en vue de la visualisation d'un objet détecté dépend de la forme de l'objet détecté.

6. Procédé selon l'une des revendications précédentes, **caractérisé en ce que** la modification géométrique de la structure graphique (7) de la représentation virtuelle correspond à une déformation élastique d'un matériau qui entoure le véhicule (1) et qui est déformé par l'objet.

7. Procédé selon l'une des revendications précédentes, **caractérisé en ce que** l'objet détecté lui-même n'est pas représenté.

8. Procédé selon l'une des revendications précédentes, **caractérisé en ce que** la modification géométrique de la structure graphique (7) est formée par une courbe de Bézier.

9. Procédé selon la revendication 8, **caractérisé en ce que** les anneaux (8) qui entourent la représentation graphique (6) du véhicule (1) sont formés par des courbes de Bézier qui sont définies au moyen de plusieurs points d'ancrage (13) espacés entourant la représentation graphique (6) du véhicule (1) et de plusieurs points de contrôle (14) qui sont respectivement associés à deux points d'ancrage (13).

10. Procédé selon la revendication 9, **caractérisé en ce que** la modification géométrique des anneaux (8) est définie **en ce que** les points de contrôle (14) des courbes de Bézier sont décalés en fonction de la position relative de l'objet détecté par rapport au véhicule (1).

11. Procédé selon la revendication 9 ou 10, **caractérisé en ce que** lors de la génération d'un enfoncement (11), le rapport des écarts mutuels des points de contrôle (14) qui font partie de différentes courbes de Bézier dépend de la position relative de l'objet détecté par rapport au véhicule (1).

12. Procédé selon l'une des revendications 9 à 11, **caractérisé en ce que** la modification géométrique d'un anneau parmi les anneaux (8) est définie **en ce que** deux points de contrôle (14-2, 14-3) de la courbe de Bézier et un point d'ancrage (13-3) se trouvant entre eux sont décalés en fonction de la position relative de l'objet détecté par rapport au véhicule (1) lorsque la position relative de l'objet détecté par rapport au véhicule (1) se trouve au niveau du point d'ancrage (13-3).

13. Procédé selon l'une des revendications 9 à 12, **caractérisé en ce que** les objets à l'intérieur de l'environnement direct du véhicule (1) sont détectés au moyen de capteurs (2), les points de contrôle (14) des courbes de Bézier dépendent des positions des capteurs (2) et les positions des points d'ancrage (13) dépendent de la forme extérieure du véhicule (1).

14. Appareil de visualisation de l'environnement direct d'un véhicule, comprenant
- un dispositif (2) servant à détecter des objets dans l'environnement direct du véhicule (1),
- un appareil d'affichage (4) muni d'une surface d'affichage disposée dans le véhicule (1) et
- un appareil de commande (5) qui est connecté au dispositif de détection d'objet (2) et à l'appareil d'affichage (4) et avec lequel peuvent être générées des données d'affichage qui représentent graphiquement le véhicule (1) sur la surface d'affichage et avec lesquelles l'environnement direct du véhicule (1) est visualisé par une structure graphique (7) qui entoure au moins partiellement le véhicule (1),
**caractérisé en ce que**
- l'appareil de commande (5) permet de générer des données d'affichage en fonction de données qui ont été transmises par le dispositif de détection d'objet (2), avec lesquelles la structure graphique (7), en vue de la visualisation d'un objet détecté, est modifiée géométriquement dans une zone qui est voisine de la position relative de l'objet détecté, la surface qui accueille la structure graphique (7) sur la surface d'affichage pouvant être modifiée et la structure graphique (7) comprenant des anneaux concentriques (8) qui entourent complètement la représentation graphique (6) du véhicule (1) et qui peuvent être représentés enfoncés (9 à 12) pour la visualisation de l'objet détecté.
